# EUROPÄISCHE PATENTSCHRIFT

(11) **EP 3 785 092 B1**
(45) Veröffentlichungstag und Bekanntmachung des Hinweises auf die Patenterteilung: **24.11.2021**
(21) Anmeldenummer: 19721532.0
(22) Anmeldetag: 18.04.2019
(51) Int. Cl.: G05D 1/02, G08G 1/0967, B60W 30/095

(54) **VERFAHREN UND VORRICHTUNG ZUM KOOPERATIVEN ABSTIMMEN VON ZUKÜNFTIGEN FAHRMANÖVERN EINES FAHRZEUGS MIT FREMDMANÖVERN ZUMINDEST EINES FREMDFAHRZEUGS**
METHOD AND DEVICE FOR A COOPERATIVE COORDINATION BETWEEN FUTURE DRIVING MANEUVERS OF ONE VEHICLE AND THE MANEUVERS OF AT LEAST ONE OTHER VEHICLE
PROCÉDÉ ET DISPOSITIF PERMETTANT D'ACCORDER UNE MANEUVRE D'ENTRE LES MANEUVRES DE CONDUITE FUTURES D'UN VÉHICULE D'UNE MANIÈRE COOPÉRATIVE AVEC DES MANEUVRES D'AU MOINS UN AUTRE VÉHICULE

(30) Priorität: 24.04.2018 DE 102018109883
(43) Veröffentlichungstag der Anmeldung: 03.03.2021
(73) Patentinhaber: Robert Bosch GmbH, 70469 Stuttgart (DE); Continental Teves AG & Co. OHG, 60488 Frankfurt am Main (DE)
(72) Erfinder: FUCHS, Hendrik, 31141 Hildesheim (DE); WILDSCHÜTTE, Florian, 31139 Hildesheim (DE); MICHALKE, Thomas, 71263 Weil der Stadt (DE); LLATSER MARTI, Ignacio, 31135 Hildesheim (DE); DOLGOV, Maxim, 71272 Renningen (DE); STRUNCK, Sebastian, 65527 Niedernhausen (DE); SCHÖNICHEN, Jonas, 64331 Weiterstadt (DE); GROTENDORST, Thomas, 65760 Eschborn (DE)
(74) Vertreter: Qip Patentanwälte Dr. Kuehn & Partner mbB
(86) Internationale Anmeldenummer: PCT/DE2019/100367
(87) Internationale Veröffentlichungsnummer: WO 2019/206377

(56) Entgegenhaltungen:
- DE-A1-102012 009 555
- DE-A1-102014 211 507
- DE-A1-102015 220 481

## Beschreibung

### Gebiet der Erfindung

Die Erfindung betrifft ein Verfahren und eine Vorrichtung zum kooperativen Abstimmen von zukünftigen Fahrmanövern eines Fahrzeugs mit Fremdmanövern zumindest eines Fremdfahrzeugs.

### Stand der Technik

Über Funk können Fahrzeuge Nachrichten untereinander und mit Infrastruktureinrichtungen austauschen. Beispielsweise kann ein Fahrzeug Objekte in seinem Erfassungsbereich erfassen und eine die erfassten Objekte beschreibende Objektnachricht versenden. Ein anderes Fahrzeug kann so ein von dem Fahrzeug außerhalb eines eigenen Erfassungsbereichs erfasstes Objekt in eigene Berechnungen mit einbeziehen. Ebenso kann das Fahrzeug eine seine geplante Fahrtroute abbildende Routingnachricht bereitstellen, um für andere Fahrzeuge eine verbesserte Routenplanung zu ermöglichen.

Die DE 10 2007 058 538 A1 beschreibt ein Verfahren zum Kontrollieren einer Gefahrensituation im Verkehr.

Die DE 10 2012 011 994 A1 beschreibt ein Verfahren zur Unterstützung von Fahrerassistenz- und/oder Sicherheitsfunktionen von Kraftfahrzeugen.

Die DE 10 2015 221 817 A1 beschreibt ein Verfahren zum dezentralen Abstimmen von Fahrmanövern.

Die DE 10 2014 211 507 A1 wird als nächstliegender Stand der Technik betrachtet und offenbart ein Verfahren gemäß dem Oberbegriff von Anspruch 1.

### Offenbarung der Erfindung

Vor diesem Hintergrund werden mit dem hier vorgestellten Ansatz ein Verfahren zum kooperativen Abstimmen von zukünftigen Fahrmanövern eines Fahrzeugs mit Fremdmanövern zumindest eines Fremdfahrzeugs, eine entsprechende Vorrichtung, sowie schließlich ein entsprechendes Computerprogrammprodukt gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ermöglichen, zukünftige Fahrmanöver verschiedener Fahrzeuge in gegenseitigem Einvernehmen abzustimmen, sodass keines der Fahrzeuge einen unverhältnismäßig großen Lenkeingriff, Bremseingriff und/oder Beschleunigungseingriff ausführen muss, um einen fließenden Verkehr zu ermöglichen. Ein hierfür eingesetztes Verfahren kann unter Einsatz einer Vorrichtung, wie z.B. eines Steuergeräts, durchgeführt werden. Zur Durchführung des Verfahrens können Signale, Messwerte oder ähnliches herangezogen und/oder analysiert werden, welche beispielsweise von Sensoren, Messgeräten oder ähnlichem bereitgestellt werden. Dabei kann das Verfahren vollautomatisiert oder teilautomatisiert durchgeführt werden. Ein Eingreifen eines Menschen braucht dabei zwar nicht ausgeschlossen sein, kann aber nicht notwendig sein.

Es wird ein Verfahren zum kooperativen Abstimmen von zukünftigen Fahrmanövern eines Fahrzeugs mit Fremdmanövern zumindest eines Fremdfahrzeugs vorgestellt, wobei das Verfahren die folgenden Schritte aufweist:
1) Bewerten einer Trajektorienschar aus vorausgeplanten Trajektorien für das Fahrzeug mit je einem Aufwandswert unter Verwendung zumindest eines Bewertungskriteriums;
2) Empfangen eines Fremddatenpakets von dem Fremdfahrzeug, wobei in dem Fremddatenpaket eine Fremdtrajektorienschar mit unterschiedlichen vorausgeplanten Fremdtrajektorien für das Fremdfahrzeug und zu jeder Fremdtrajektorie ein Fremdaufwandswert enthalten sind;
3) Kombinieren je einer Trajektorie und einer Fremdtrajektorie zu Tupeln und Kombinieren des jeweiligen Aufwandswerts mit dem jeweiligen Fremdaufwandswert zu einem Tupelaufwandswert des Tupels;
4) Auswählen von kollisionsfreien Tupeln, wobei Tupel ausgewählt werden, bei denen die Trajektorie und die Fremdtrajektorie innerhalb eines Kollisionshorizonts kollisionsfrei sind;
5) Auswählen der Trajektorie und des zugehörigen Aufwandswerts des kollisionsfreien Tupels mit dem geringsten Tupelaufwandswert als Bezugstrajektorie und Bezugsaufwandswert;
6) Klassifikation von Trajektorien mit einem niedrigeren Aufwandswert als der Bezugsaufwandswert als Bedarfstrajektorien und Bedarfsaufwandswerte;
7) Klassifikation von Trajektorien mit einem höheren Aufwandswert als der Bezugsaufwandswert als Alternativtrajektorien und Alternativaufwandswerte; und
8) Senden eines Datenpakets an das Fremdfahrzeug, wobei in dem Datenpaket eine Trajektorienschar aus der Bezugstrajektorie und des zugehörigen Bezugsaufwandswerts sowie zumindest einer Trajektorie aus einer Gruppe umfassend die Bedarfstrajektorien und die Alternativtrajektorien sowie die entsprechenden Aufwandswerte enthalten sind.

Insbesondere können die Schritte (5) bis (7) konkretisiert wie folgt ausgestaltet sein:
5a) Auswählen des kollisionsfreien Tupels (210) mit dem geringsten Tupelaufwandswert und Klassifizieren der Trajektorie (108) und des zugehörigen Aufwandswerts (112) dieses Tupels (210) als Bezugstrajektorie (110) und Bezugsaufwandswert (114);
6a) Auswählen von Trajektorien (108) mit einem niedrigeren Aufwandswert (112) als der Bezugsaufwandswert (114) und Klassifizieren dieser Trajektorien (108) und zugehöriger Aufwandswerte (112) als Bedarfstrajektorien und Bedarfsaufwandswerte, wobei eine Bedarfstrajektorie eine einen Wunsch des Fahrzeugs angebende Trajektorie ist, mit der ein gewünschtes Fahrziel günstiger erreicht werden kann als mit der Bezugstrajektorie;
7a) Auswählen von Trajektorien (108) mit einem höheren Aufwandswert (112) als der Bezugsaufwandswert (114) und Klassifizieren dieser Trajektorien (108) und zugehöriger Aufwandswerte (112) als Alternativtrajektorien und Alternativaufwandswerte, wobei eine Alternativtrajektorie eine ein Kooperationsangebot der Fahrzeugs angebende Trajektorie ist, die das Fahrzeug gegebenenfalls bereit wäre, zu fahren.

Ideen zu Ausführungsformen der vorliegenden Erfindung können unter anderem als auf den nachfolgend beschriebenen Gedanken und Erkenntnissen beruhend angesehen werden.

Unter einem Fahrmanöver eines Fahrzeugs kann ein Lenken, Bremsen und/oder Beschleunigen des Fahrzeugs verstanden werden. Ein Antriebsstrang des Fahrzeugs kann das Fahrzeug durch ein Schleppmoment bremsen und durch ein Antriebsmoment beschleunigen. Eine Bremsanlage des Fahrzeugs kann das Fahrzeug durch ein Bremsmoment bremsen. Eine Lenkanlage des Fahrzeugs kann das Fahrzeug durch einen Lenkeinschlag lenken. Die Fahrmanöver sind geschwindigkeitsabhängig. Beispielsweise bestimmt eine aktuelle Geschwindigkeit des Fahrzeugs einen momentan minimal fahrbaren Kurvenradius. Durch ein Bremsen vor dem Lenken kann ein kleinerer Kurvenradius gefahren werden.

Das Fahrzeug kann als Eigenfahrzeug beziehungsweise Ego-Fahrzeug bezeichnet werden. In einer Vorrichtung des Fahrzeugs kann das hier beschriebene Verfahren ausgeführt werden. Das Fahrzeug kann zumindest teilweise von einem Fahrer gesteuert werden. Dazu kann der Fahrer Fahranweisungen von der Vorrichtung erhalten. Die Fahrmanöver können auch zumindest teilweise durch ein Steuergerät angesteuert werden. Das Fahrzeug kann auch vollautonom oder teilautonom durch das Steuergerät gesteuert werden.

Ein Fremdfahrzeug ist ein anderes Fahrzeug. Die Vorsilbe "Fremd" wird im Text auch bei anderen dem Fremdfahrzeug zugeordneten Begriffen zur Unterscheidbarkeit verwendet. Das Fremdfahrzeug wird durch einen fremden Fahrer oder ein fremdes Steuergerät gesteuert. Auf einer Fremdvorrichtung des Fremdfahrzeugs kann ebenfalls das hier vorgestellte Verfahren ausgeführt werden. Unter einem Fremdmanöver kann ein Fahrmanöver des Fremdfahrzeugs verstanden werden. Der hier vorgestellte Ansatz kann auch mit vertauschten Rollen, aus der Perspektive des Fremdfahrzeugs ausgeführt werden, wobei dabei die Begriffe Fahrzeug und Fremdfahrzeug sowie die zugehörigen Merkmale ausgetauscht sind.

Eine Trajektorie beschreibt einen Zustandsverlauf (z.B. Position, Orientierung, Geschwindigkeits- und Beschleunigungsvektoren, etc.) über die Zeit, auf dem das Fahrzeug unter Verwendung der Fahrmanöver gesteuert werden kann. Die Trajektorie ist mehrdimensional, insbesondere zweidimensional oder dreidimensional. Die Trajektorie kann sich entlang einer von dem Fahrzeug zu befahrenden Fahroberfläche, beispielsweise einer Straße, erstrecken. Die Trajektorie beschreibt also, wo sich das Fahrzeug zu welcher Zeit befindet beziehungsweise zukünftig befinden wird. Die Trajektorie wird zumindest bis zu einem Prädiktionshorizont vorausgeplant. Beispielsweise kann der Prädiktionshorizont durch eine Sensorreichweite des Fahrzeugs bestimmt sein. Der Prädiktionshorizont kann geschwindigkeitsabhängig sein. Ein Kollisionshorizont kann kleiner oder gleich dem Prädiktionshorizont sein. Der Kollisionshorizont kann ebenfalls geschwindigkeitsabhängig sein. Trajektorien werden als kollisionsfrei bewertet, wenn sie von dem Fahrzeug bis zum Kollisionshorizont so verlaufen, dass das Fahrzeug und das Fremdfahrzeug jeweils mindestens einen Mindestabstand zueinander aufweisen.

In einer Trajektorienschar ist eine Gruppe von möglichen Trajektorien zusammengefasst, die sich in einem gemeinsamen Punkt schneiden beziehungsweise von einem gemeinsamen Punkt ausgehen. Der gemeinsame Punkt kann eine aktuelle Position des Fahrzeugs zum aktuellen Zeitpunkt sein. An dem gemeinsamen Punkt fährt das Fahrzeug bei allen Trajektorien einer Trajektorienschar mit identischer Geschwindigkeit und identischer Richtung. Die Trajektorien der Trajektorienschar sind alle zumindest geringfügig unterschiedlich. Zumindest ein Fahrmanöver ist bei allen Trajektorien der Trajektorienschar unterschiedlich. Unterschiedliche Trajektorien der Trajektorienschar können sich kreuzen. Dabei kann eine zukünftige Position zum gleichen zukünftigen Zeitpunkt über unterschiedliche Trajektorien erreicht werden.

Ein Datenpaket kann eine in sich abgeschlossene Nachricht sein. Das Datenpaket kann als Manöverabstimmungsnachricht bezeichnet werden. Das Datenpaket kann über eine Kommunikationsschnittstelle von dem Fahrzeug zu Fremdfahrzeugen übermittelt werden. Umgekehrt können die Fremdfahrzeuge Fremddatenpakete über die Kommunikationsschnittstelle für das Fahrzeug bereitstellen. In dem Datenpaket beziehungsweise dem Fremddatenpaket kann eine einzelne Trajektorieninformation einer einzelnen, für das Fahrzeug vorausgeplanten Trajektorie enthalten sein. Entweder das Fahrzeug oder das Fremdfahrzeug übermitteln Trajektorieninformationen von zumindest zwei Trajektorien, sodass für die Tupelbildung zumindest drei Trajektorien vorhanden sind. Insbesondere sind in dem Datenpaket Trajektorieninformationen von unterschiedlichen Trajektorien einer für das Fahrzeug vorausgeplanten Trajektorienschar enthalten. Beispielsweise können die Trajektorien als Abfolge von Ortskoordinaten in festgelegten Abständen voneinander abgebildet sein. Dabei können die Abstände räumlich oder zeitlich sein. Bei räumlichen Abständen sind die Ortskoordinaten mit Zeitstempeln versehen. Die Trajektorien können auch parametriert abgebildet sein. Dabei kann die Trajektorie als Kurve mathematisch beschrieben sein. Die Trajektorie kann abschnittsweise beschrieben sein.

In dem Datenpaket sind zu jeder Trajektorie Aufwandswerte enthalten. Durch die Aufwandswerte sind die Trajektorien vergleichbar, ohne einen Fahraufwand der einzelnen Fahrmanöver für jede Trajektorie nachvollziehen zu müssen.

Der Aufwandswert beschreibt den zum Abfahren einer der Trajektorien erforderlichen Fahraufwand. Der Fahraufwand kann für unterschiedliche Fahrzeuge unterschiedlich sein. Beispielsweise kann der Fahraufwand für ein agiles, leichtes Fahrzeug geringer sein, als für ein großes, schwerfälliges Fahrzeug auf der gleichen Trajektorie. Ein konstantes Fahren ohne Geschwindigkeitsänderung und Richtungsänderung kann mit einem geringen Fahraufwand beziehungsweise keinem Fahraufwand bewertet werden. Ein starkes Bremsen kann mit einem größeren Fahraufwand bewertet werden, als ein schwaches Bremsen. Ein starkes Beschleunigen kann mit einem größeren Fahraufwand bewertet werden, als ein schwaches Beschleunigen. Ein enger Kurvenradius kann mit einem größeren Fahraufwand bewertet werden, als ein weiter Kurvenradius. Der Aufwandswert vereint die entlang der jeweiligen Trajektorie erforderlichen Fahraufwände zu einem Zahlenwert. Eine Trajektorie mit extremen Fahrmanövern wird dadurch mit einem höheren Aufwandswert bewertet, als eine Trajektorie mit schwach ausgeprägten Fahrmanövern. Ein Bewertungskriterium kann Zahlenwerte für den Fahraufwand zu den einzelnen Fahrmanövern zuordnen. Das Bewertungskriterium kann von einem Fahrer des Fahrzeugs beeinflusst werden.

Ein Tupel besteht aus zumindest zwei Trajektorien. Die Trajektorien eines Tupels sind Bestandteil unterschiedlicher Trajektorienscharen unterschiedlicher Fahrzeuge. Damit gehen die Trajektorien des Tupels von unterschiedlichen Punkten aus. Die Trajektorien des Tupels können sich schneiden. Wenn die unterschiedlichen Fahrzeuge den Schnittpunkt der Trajektorien zu unterschiedlichen Zeiten erreichen, wird das Tupel als kollisionsfrei bewertet, wenn die Fahrzeuge jederzeit zumindest durch einen Mindestabstand voneinander beabstandet sind. Der Mindestabstand kann in Richtung der Trajektorien größer sein, als quer zu den Trajektorien. Der Mindestabstand kann geschwindigkeitsabhängig sein. Wenn der Mindestabstand unterschritten wird, wird das Tupel als kollisionsbehaftet bewertet.

Der Tupelaufwandswert drückt aus, wie groß der Fahraufwand aller in einem Tupel betrachteten Fahrzeuge zusammen ist. Wenn ein oder mehrere Fahrzeuge auf den Trajektorien eines Tupels radikale Fahrmanöver ausführen müssen, um einem anderen Fahrzeug eine optimierte Trajektorie zu ermöglichen, so wird ein höherer Tupelaufwandswert des Tupels resultieren, als bei einem Tupel, bei dem alle beteiligten Fahrzeuge gemäßigte Fahrmanöver ausführen.

Die einzelnen Aufwandswerte der Trajektorien eines Tupels können beispielsweise addiert werden, um den Tupelaufwandswert des Tupels zu erhalten. Ebenso können die Aufwandswerte unterschiedlich gewichtet werden, um den Tupelaufwandswert zu bestimmen. Bei der Gewichtung der Aufwandswerte kann eine Kooperationsbereitschaft der Fahrer der betrachteten Fahrzeuge berücksichtigt werden.

Als Bezugstrajektorie kann die Trajektorie bezeichnet werden, die aus der Trajektorienschar ausgewählt wird, um von dem Fahrzeug tatsächlich abgefahren zu werden. Der Bezugsaufwandswert kann als Referenzwert für die anderen Aufwandswerte verwendet werden. Die anderen Aufwandswerte können auf den Bezugsaufwandswert normiert werden. Dabei kann der Bezugsaufwandswert beispielsweise auf einen Mittelwert eines Aufwandswerteraums gesetzt werden. Die Trajektorien mit einem höheren Fahraufwand als die Bezugstrajektorie können dann größere Aufwandswerte als den Mittelwert aufweisen und als Alternativtrajektorien bezeichnet werden. Die Trajektorien mit einem niedrigeren Fahraufwand als die Bezugstrajektorie können dann kleinere Aufwandswerte als den Mittelwert aufweisen und als Bedarfstrajektorien bezeichnet werden.

In den Tupelaufwandswert kann auch eine funktionsspezifische Komponente einfließen. Eine funktionsspezifische Komponente kann z.B. eine Komfortbedingung sein, die dazu führt, dass insbesondere Tupel mit unkritischen Fahrzeugabständen präferiert werden.

Der Kollisionshorizont kann situationsabhängig sein. Beispielsweise kann der Kollisionshorizont abhängig von einer Verkehrsdichte sein. Bei dichtem Verkehr kann der Kollisionshorizont kleiner sein, als bei wenig Verkehr. Ebenso kann der Kollisionshorizont abhängig von einer Verkehrssituation sein. Wenn das Fahrzeug an einer Ampel steht, kann der Kollisionshorizont geringer sein, als wenn das Fahrzeug auf einer Schnellstraße fährt.

Im Datenpaket können ferner Sensordaten des Fahrzeugs enthalten sein. Durch die Sensordaten kann eine momentane Situation verbessert eingeschätzt werden, da Sensordaten aus einem anderen Blickwinkel, als dem eigenen verfügbar sind. Alternativ oder ergänzend kann das Fremddatenpaket ferner Sensordaten des Fremdfahrzeugs enthalten. Der Kollisionshorizont kann unter Verwendung der Sensordaten eingestellt werden. Durch eine Kombination von Sensordaten mehrerer Fahrzeuge können Hindernisse beispielsweise gut erkannt werden.

Die kollisionsfreien Tupel können unter Verwendung der Straßenverkehrsordnung ausgewählt werden. Tupel, deren Trajektorie gegenüber der Fremdtrajektorie vorfahrtsberechtigt ist, können trotz Unterschreiten des Mindestabstands als kollisionsfreie Tupel ausgewählt werden. Tupel, bei denen das Fahrzeug gegenüber dem Fremdfahrzeug Vorfahrt gewähren muss und der räumliche Mindestabstand unterschritten wird, können als kollisionsbehaftete Tupel ausgewählt werden. So können Konflikte gemäß der Straßenverkehrsordnung gelöst werden. Unter einer Straßenverkehrsordnung kann die im jeweiligen Land gültige gesetzliche Regelung verstanden werden. In Deutschland z.B. die StVO.

Zumindest ein weiteres Fremddatenpaket kann von einem weiteren Fremdfahrzeug empfangen werden. Eine weitere Fremdtrajektorie kann zu dem Tupel hinzugefügt werden. Der Tupelaufwandswert kann mit einem weiteren Fremdaufwandswert ergänzt werden. Die Tupel können aus drei oder mehr Trajektorien gebildet werden. Wenn die eigene Trajektorie mit zumindest einer der Fremdtrajektorien kollisionsbehaftet ist und Vorfahrt gewährt werden muss, wird das Tupel für die Auswahl der Bezugstrajektorie nicht berücksichtigt.

Die Fremdtrajektorienschar kann ferner eine Bezugstrajektorie des Fremdfahrzeugs und einen Bezugsaufwandswert der Bezugstrajektorie aufweisen. Ein Fremdbezugstupel kann aus der Fremdbezugstrajektorie und einer der Trajektorien kombiniert werden. Die Trajektorie des kollisionsfreien Fremdbezugstupels mit dem niedrigsten Tupelaufwandswert kann als Bezugstrajektorie ausgewählt werden. Die Bezugstrajektorie des anderen Fahrzeugs kann im Fremddatenpaket als Fremdbezugstrajektorie gekennzeichnet sein. Die Fremdbezugstrajektorie wird momentan zum Ansteuern des Fremdfahrzeugs verwendet. Die eigene Bezugstrajektorie kann unter Berücksichtigung der Fremdbezugstrajektorie ausgewählt werden, insbesondere, wenn die Fremdbezugstrajektorie vorfahrtsberechtigt gegenüber den eigenen Trajektorien ist.

Zu zumindest einer Fremdtrajektorie kann eine Kategorie empfangen werden. Die Bezugstrajektorie kann ferner unter Verwendung der Kategorie ausgewählt werden. Alternativ oder ergänzend kann zu zumindest einer der Trajektorien eine Kategorie gesendet werden. Im Fremdfahrzeug kann die Fremdbezugstrajektorie unter Verwendung der Kategorie ausgewählt werden. Eine Kategorie kann eine Zusatzinformation zu einer Trajektorie sein. Beispielsweise können Ausnahmesituationen unter Verwendung von Kategorien kenntlich gemacht werden. Eine Trajektorie kann beispielsweise als Notfalltrajektorie eingestuft werden. Die Notfalltrajektorie kann dem Fahrzeug durch äußere Zwänge aufgezwungen werden, beispielsweise durch einen Defekt, einen Notfall oder ein Ausweichmanöver. Einem Fahrzeug auf einer Notfalltrajektorie können andere Fahrzeuge mehr Kooperation entgegenbringen. Eine Trajektorie kann auch als Kooperationsangebot eingestuft werden. Die als Kooperationsangebot eingestufte Trajektorie kann eine für das andere Fahrzeug vorteilhafte Trajektorienwahl ermöglichen. Eine Trajektorie kann auch als Trajektorie mit Sonderrechten eingestuft werden. So kann beispielsweise ein Einsatzfahrzeug die Gewährung von Vorfahrtsrechten von anderen Verkehrsteilnehmern einfordern.

Die Alternativtrajektorien für die Versendung an Fremdfahrzeuge können aus kollisionsfreien Tupeln ausgewählt werden. Alternativtrajektorien sind mit einem größeren Aufwand für das Fahrzeug verbunden und werden als Angebote für Fremdfahrzeuge beziehungsweise andere Fahrzeuge ausgewählt. Dabei ist es vorteilhaft nur Trajektorien auszuwählen, die für das andere Fahrzeug vorteilhaft sein können.

Die Fremdtrajektorie kann zumindest bis zu einem Prädiktionshorizont des Fahrzeugs prädiziert werden, wenn das Fremdfahrzeug einen kürzeren Fremdprädiktionshorizont für die übertragenen Trajektorien nutzt. Die Fremdtrajektorie kann unter der Annahme ähnlicher Rahmenbedingungen bis zu dem eigenen Prädiktionshorizont verlängert werden. Damit können zu wenig weit vorausschauend geplante Fremdtrajektorien sinnvoll für die Kollisionsbetrachtung verwendet werden.

Die Fremdtrajektorien können auf einen Berechnungszeitpunkt der Trajektorien transformiert werden. Durch eine Datenübertragung des Fremddatenpakets und des Datenpakets sowie eine Berechnungszeit des Verfahrens können die Fremdtrajektorien einen Zeitversatz zu den eigenen Trajektorien aufweisen. Durch die zeitliche Transformation können kollisionsbehaftete Tupel und kollisionsfreie Tupel genauer unterschieden werden. Der Sicherheitsabstand kann verringert werden, da die zukünftige Position des Fremdfahrzeugs genauer bestimmt werden kann.

Das Verfahren kann beispielsweise in Software oder Hardware oder in einer Mischform aus Software und Hardware beispielsweise in einem
Steuergerät implementiert sein.

Der hier vorgestellte Ansatz schafft ferner eine Vorrichtung, die dazu ausgebildet ist, die Schritte einer Variante des hier vorgestellten Verfahrens in entsprechenden Einrichtungen durchzuführen, anzusteuern bzw. umzusetzen.

Die Vorrichtung kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC, ein Mikroprozessor oder ein Mikrocontroller zum Verarbeiten von Sensorsignalen des eigenen und/oder fremder Fahrzeuge und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie z.B. einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einer Vorrichtung ausgeführt wird.

Es wird daraufhingewiesen, dass einige der möglichen Merkmale und Vorteile der Erfindung hierin mit Bezug auf unterschiedliche Ausführungsformen beschrieben sind. Ein Fachmann erkennt, dass die Merkmale des Verfahrens und der Vorrichtung in geeigneter Weise kombiniert, angepasst oder ausgetauscht werden können, um zu weiteren Ausführungsformen der Erfindung zu gelangen.

### Kurze Beschreibung der Zeichnungen

Nachfolgend werden Ausführungsformen der Erfindung unter Bezugnahme auf die beigefügten Zeichnungen beschrieben, wobei weder die Zeichnungen noch die Beschreibung als die Erfindung einschränkend auszulegen sind.
Fig. 1 zeigt eine Darstellung eines Fahrzeugs mit einer Vorrichtung gemäß einem Ausführungsbeispiel;
Fig. 2 zeigt eine Darstellung eines Fahrzeugs und eines Fremdfahrzeugs mit einer Trajektorienschar und einer Fremdtrajektorienschar;
Fig. 3 zeigt eine Darstellung eines Fahrzeugs und eines Fremdfahrzeugs mit einer gemäß einem Ausführungsbeispiel auf die Fremdtrajektorienschar abgestimmten Trajektorienschar; und
Fig. 4 zeigt eine Darstellung eines Fahrzeugs und eines Fremdfahrzeugs mit gemäß einem Ausführungsbeispiel aufeinander abgestimmten Trajektorienscharen.

Die Figuren sind lediglich schematisch und nicht maßstabsgetreu. Gleiche Bezugszeichen bezeichnen in den Figuren gleiche oder gleichwirkende Merkmale.

Wenn Manöver zwischen Fahrzeugen abgestimmt werden, sodass unter anderem Komfort, Effizienz und Sicherheit erhöht werden, kann das als kooperatives Fahren bezeichnet werden. Dies wird durch die Möglichkeit einer direkten Fahrzeug-zu-Fahrzeug-Kommunikation (V2V) sowie durch die zunehmende Automatisierung von Fahrzeugen begünstigt.

In unterschiedlichen Szenarien können Verfahren für unterschiedliche Arten von Manöverabstimmungen zwischen Fahrzeugen durchgeführt werden.

Beispielsweise kann eine Manöverabstimmung beim Ausweichen vor Hindernissen ermöglicht werden. Dabei übermitteln zunächst die beteiligten Fahrzeuge eine Menge an möglichen Ausweichtrajektorien. Eine Trajektorie beschreibt dabei die Position beziehungsweise den Zustandsverlauf des Fahrzeugs über die Zeit. Sie kodiert damit, wo sich das Fahrzeug zu einem zukünftigen Zeitpunkt befinden wird. Die Darstellung von Trajektorien kann entweder nichtparametrisch, z.B. als eine Sequenz von Ortspunkten oder diskreten oder kontinuierlichen Verteilungen über die Zeit oder parametrisch als eine von der Zeit abhängige Kurve, die z.B. in Form eines Polynoms oder einer Klothoide oder einem Fluss einer diskreten oder kontinuierlichen Verteilung vorliegt erfolgen.

Sogenannte Alternativtrajektorien werden dabei an benachbarte Fahrzeuge übermittelt. Anschließend wird aus der Menge der möglichen Kombinationen der Alternativtrajektorien eine ausgewählt, bei der ein zu erwartender Schaden minimiert oder ganz vermieden wird. Bei der Bewertung der Kombinationen wird zudem eine Priorisierung der jeweiligen Alternativtrajektorien berücksichtigt.

Die Manöverabstimmung kann auch in generellen Situationen im Straßenverkehr erfolgen. Fahrzeuge können bei Bedarf Informationen zu ihrem aktuellen Fahrverhalten sowie ihr beabsichtigtes Fahrverhalten in Form einer Trajektorie übertragen. Ein weiteres Fahrzeug überprüft, ob es das beabsichtigte Manöver des sendenden Fahrzeugs ermöglichen kann und quittiert es gegebenenfalls explizit oder implizit durch Anpassung seiner Bezugstrajektorie, sodass das Fahrzeug, das sein beabsichtigtes Fahrmanöver verschickt hat, es durchführen kann.

### Ausführungsformen der Erfindung

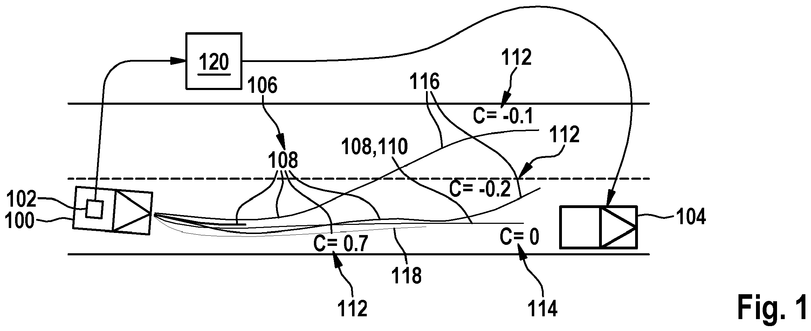

Fig. 1 zeigt eine Darstellung eines Fahrzeugs 100 mit einer Vorrichtung 102 zum kooperativen Abstimmen von zukünftigen Fahrmanövern des Fahrzeugs 100 mit Fahrmanövern zumindest eines anderen Fahrzeugs 104. Das Fahrzeug 100 fährt hier auf einer Straße hinter dem anderen Fahrzeug 104. Das andere Fahrzeug 104 kann als Fremdfahrzeug 104 bezeichnet werden. Sensoren des Fahrzeugs 100 erfassen eine aktuelle Verkehrssituation im Umfeld des Fahrzeugs 100. Alternativ oder ergänzend empfängt das Fahrzeug 100 Informationen über die Verkehrssituation über Funk. In Abhängigkeit von der Verkehrssituation wird für das Fahrzeug 100 eine Trajektorienschar 106 aus momentan möglichen Trajektorien 108 geplant und eine der Trajektorien 108 als Bezugstrajektorie 110 ausgewählt. Eine Trajektorie 108 beschreibt einen vorberechneten Verlauf von Ortskoordinaten, an denen das Fahrzeug 100 zukünftig sein würde, wenn es diese Trajektorie 108 durch Fahrmanöver, wie Lenken, Bremsen oder Beschleunigen abfahren würde. Die Bezugstrajektorie 110 ist dabei tatsächlich ausgewählt, um angesteuert zu werden.

Die Trajektorien 108 weisen dabei alle den gleichen Ursprung auf. Der Ursprung liegt hier an einer aktuellen Position des Fahrzeugs 100. Die Trajektorienschar 106 wird bezogen auf einen Prädiktionshorizont geplant. Der Prädiktionshorizont kennzeichnet, an welcher Ortskoordinate das Fahrzeug 100 nach Ablauf einer Zeitdauer sein wird. Abhängig davon, wie das Fahrzeug 100 beschleunigt, gebremst und/oder gelenkt wird, sind die Trajektorien 108 unterschiedlich lang und enden an verschiedenen Ortskoordinaten. Beispielsweise ist hier eine Trajektorie 108 mit maximaler Verzögerung, eine Trajektorie 108 mit einem Spurwechsel, die Bezugstrajektorie 110 ohne Lenkeingriff und Bremseingriff, eine Trajektorie 108 mit einem Ausweichmanöver und eine Trajektorie 108 mit einem moderaten Bremseingriff dargestellt.

Die Trajektorien 108 der Trajektorienschar 106 werden in der Vorrichtung 102 jeweils mit einem Aufwandswert 112 bewertet. So wird die Trajektorie 108 mit dem Spurwechsel hier exemplarisch mit einem Aufwandswert 112 von -0,1 bewertet. Die Trajektorie 108 mit dem Ausweichmanöver wird mit einem Aufwandswert 112 von -0,2 bewertet, Die Bezugstrajektorie 110 wird mit einem Bezugsaufwandswert 114 von Null bewertet und die Trajektorie 108 mit dem moderaten Bremseingriff wird mit einem Aufwandswert 112 von 0,7 bewertet.

Trajektorien mit einem Aufwandswert 112 größer als der Bezugsaufwandswert 114 werden in einem Ausführungsbeispiel als Alternativtrajektorien 116 bezeichnet. Trajektorien 108 mit einem Aufwandswert kleiner als der Bezugsaufwandswert 114 werden als Bedarfstrajektorien 118 bezeichnet.

Die Vorrichtung 102 sendet ein Datenpaket 120 an das andere Fahrzeug 104. In dem Datenpaket 120 sind Informationen zu Trajektorien 108 der Trajektorienschar 106 enthalten. Die jeweiligen Aufwandswerte 112 werden ebenfalls über das Datenpaket 120 übermittelt.

In einem Ausführungsbeispiel sind in dem Datenpaket 120 Informationen zur Bezugstrajektorie 110 und zumindest einer weiteren Trajektorie 108 der Trajektorienschar 106 enthalten.

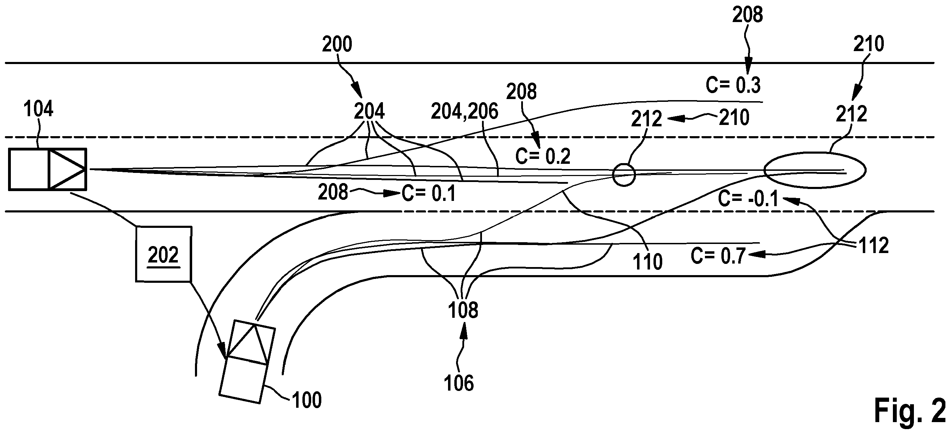

Fig. 2 zeigt eine Darstellung eines Fahrzeugs 100 und eines Fremdfahrzeugs 104 mit einer Trajektorienschar 106 und einer Fremdtrajektorienschar 200. Die Trajektorienschar 106 ist so geplant, dass das Fahrzeug 100 über eine Auffahrt auf eine mehrspurige Straße auffahren wird. Dabei ist die Bezugstrajektorie 110 so geplant, dass das Fahrzeug 100 etwa auf der Hälfte einer Beschleunigungsspur der Auffahrt auf die rechte Fahrspur der Straße wechseln wird. Als andere Möglichkeiten sind Trajektorien 108 geplant, auf denen das Fahrzeug 100 länger auf der Beschleunigungsspur bleibt und später auf die rechte Spur wechselt oder auf der Beschleunigungsspur abbremst. Das spätere Wechseln ist dabei mit einem Aufwandswert 112 von -0,1 bewertet, das Abbremsen mit 0,7.

Das Fremdfahrzeug 104 fährt bereits auf der rechten Fahrspur der Straße. Das Fahrzeug 100 erhält ein Fremddatenpaket 202 von dem Fremdfahrzeug 104 mit Informationen zu der geplanten Fremdtrajektorienschar 200. Für das Fremdfahrzeug 104 ist als Fremdbezugstrajektorie 206 geplant, konstant auf der rechten Fahrspur zu fahren. Auf alternativen Trajektorien 204 wird das Fremdfahrzeug 104 auf der rechten Fahrspur beschleunigt oder abgebremst. Auf einer weiteren Trajektorie 204 ist ein Spurwechsel auf die linke Fahrspur geplant. Im Fremddatenpaket 202 sind weiterhin Fremdaufwandswerte 208 zu den Fremdtrajektorien 204 hinterlegt. Dabei wird der Spurwechsel mit 0,3 bewertet, das Beschleunigen mit 0,2 und das Bremsen mit 0,1.

Im Fahrzeug 100 werden die einzelnen Trajektorien 108 der Trajektorienschar 106 mit der Fremdbezugstrajektorie 206 der Fremdtrajektorienschar 200 verglichen. Dazu werden Tupel 210 aus je einer Trajektorie 108 und der Fremdbezugstrajektorie 206 gebildet. In jedem Tupel 210 wird ein Tupelaufwandswert aus dem jeweiligen Aufwandswert 112 und dem jeweiligen Fremdaufwandswert 208 bestimmt. Die Tupel 210 werden auf Kollisionen 212 untersucht. Dabei wird erkannt, dass das Fahrzeug 100 nicht ohne Kollision 212 mit der aktuellen Fremdbezugstrajektorie 206 von der Beschleunigungsspur auf die Straße wechseln kann, da die rechte Spur der Straße durch das Fremdfahrzeug 104 belegt ist.

Auf der einzigen kollisionsfreien Trajektorie 108 würde das Fahrzeug 100 auf der Beschleunigungsspur abgebremst.

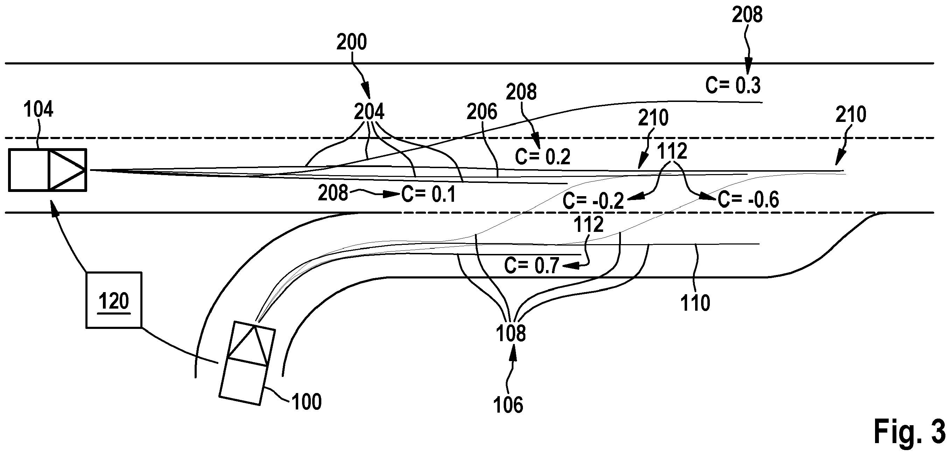

Fig. 3 zeigt eine Darstellung eines Fahrzeugs 100 und eines Fremdfahrzeugs 104 mit einer gemäß einem Ausführungsbeispiel auf die Fremdtrajektorienschar 200 abgestimmten Trajektorienschar 106. Die Darstellung entspricht dabei im Wesentlichen der Darstellung in Fig. 2. Hier hat das Fahrzeug 100 aus den Trajektorien 108 die einzige kollisionsfreie Trajektorie 108 als Bezugstrajektorie 110 ausgewählt, hier mit dem Aufwandswert Null versehen und die anderen Trajektorien 108 mit neuen Aufwandswerten 112 bewertet. Auf der neuen Bezugstrajektorie 110 wird das Fahrzeug 100 jetzt auf der Beschleunigungsspur abgebremst, um das Fremdfahrzeug 104 auf der rechten Fahrspur passieren zu lassen. Wenn mehrere kollisionsfreie Trajektorien 108 zur Auswahl gestanden hätten, wäre die Trajektorie 108 ausgewählt worden, die mit einer Fremdtrajektorie 204 ein Tupel 210 mit dem niedrigsten Tupelaufwandswert gebildet hätte.

Die Trajektorie 108 mit dem frühen Wechsel auf die rechte Fahrspur ist jetzt mit einem Aufwandswert 112 von -0,2 bewertet. Die Trajektorie 108 mit dem späteren Wechsel ist mit -0,6 bewertet. Eine neue Trajektorie 108, auf der das Fahrzeug 100 auf der Beschleunigungspur noch stärker abgebremst würde, ist mit einem Aufwandswert von 0,7 bewertet. Die Trajektorien 108 und ihre zugehörigen neuen Aufwandswerte 112 werden wie in Fig. 1 in einem Datenpaket 120 an das Fremdfahrzeug 104 gesendet.

Im Fremdfahrzeug 104 werden jetzt Tupel 210 aus jeweils einer Fremdtrajektorie 204 und einer Trajektorie 108 gebildet und der jeweilige Tupelaufwandswert aus dem zugehörigen Fremdaufwandswert 208 und dem zugehörigen Aufwandswert 112 bestimmt. Kollisionsfreie Tupel 210 werden selektiert und das Tupel 210 mit dem niedrigsten Tupelaufwandswert ausgewählt. Aufgrund der vorhergehenden Neubestimmung der Aufwandswerte 112 im Fahrzeug 100 wird dabei deutlich, dass das Tupel 210 bestehend aus der spät auf die rechte Fahrspur wechselnden Trajektorie 108 und der Fremdtrajektorie 204 mit der geringen Verzögerung ausgewählt wird.

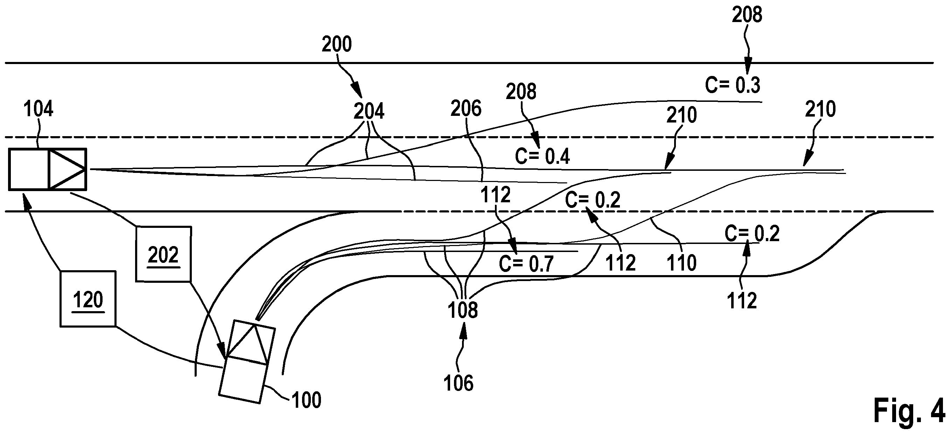

Fig. 4 zeigt eine Darstellung eines Fahrzeugs 100 und eines Fremdfahrzeugs 104 mit gemäß einem Ausführungsbeispiel aufeinander abgestimmten Trajektorienscharen 106, 200. Die Darstellung entspricht dabei im Wesentlichen den Darstellungen in den Figuren 2 und 3. Hier hat das Fremdfahrzeug 104 auf die geänderte Bezugstrajektorie 110 und die entsprechend geänderten Aufwandswerte 112 reagiert, seinerseits die Fremdtrajektorie 204 mit der geringen Verzögerung als neue Fremdbezugstrajektorie 206 ausgewählt und die restlichen Fremdtrajektorien 204 mit neuen Fremdaufwandswerten 208 bewertet. Dabei wird die Fremdtrajektorie 204 mit der Beschleunigung jetzt mit einem Fremdaufwandswert von 0,4 bewertet, während der Spurwechsel weiterhin mit 0,3 bewertet wird.

Diese Informationen werden in einem neuen Fremddatenpaket 202 an das Fahrzeug 100 übermittelt. Dieses bildet erneut Tupel 210 und kombiniert die Aufwandswerte 112 und Fremdaufwandswerte 208 zu Tupelaufwandswerten. Da jetzt mehrere Trajektorien 108 kollisionsfrei zur Fremdbezugstrajektorie 206 sind, wird das Tupel 210 mit dem niedrigsten Tupelaufwandswert ausgewählt und die Trajektorie 108 mit dem späten Spurwechsel auf die rechte Spur als neue Bezugstrajektorie 110 ausgewählt. Die Aufwandswerte 112 der restlichen Trajektorien 108 werden entsprechend neu bestimmt. Dabei wird der frühe Spurwechsel jetzt mit einem Aufwandswert 112 von 0,2 bewertet. Das mäßige Verzögern auf dem Beschleunigungsstreifen wird ebenfalls mit 0,2 bewertet. Das starke Verzögern wird weiterhin mit 0,7 bewertet. Diese Informationen werden wieder in einem neuen Datenpaket 120 an das Fremdfahrzeug 104 gesendet.

Mit anderen Worten wird bei dem hier vorgestellten Ansatz eine dezentrale Abstimmung von kooperativen Fahrmanövern basierend auf optionalen Trajektorien vorgestellt.

Bei dem hier vorgestellten Ansatz wird ein Verfahren für eine kooperative Manöverabstimmung beschrieben, das auf dem Austausch von Trajektorien basiert. Hier werden Informationen über die aktuell geplante Trajektorie beziehungsweise Bezugstrajektorie und mögliche Trajektorien z. B. für ein Ausweichmanöver (Alternativtrajektorien) bzw. für ein beabsichtigtes Manöver (Bedarfstrajektorien) mit zugehörigen Aufwandsbewertungen übertragen. Dadurch können die beteiligten Fahrzeuge ein optimales gemeinsames Manöver (mit dem niedrigsten Gesamtaufwand) abstimmen. Dabei wird nicht immer nur genau eine einzelne gewünschte Trajektorie übertragen, was den Handlungsspielraum in komplexen Szenarien vergrößert und die Wahrscheinlichkeit einer für alle Seiten gewinnbringende Kooperation erhöht. Die Entscheidung, ob eine Bedarfstrajektorie ermöglicht wird, erfolgt nicht auf Basis einer globalen Kostenfunktion, die für die Kosten anderer Fahrzeuge Annahmen trifft. Für eine optimale Entscheidungsfindung wird also keine unter allen Fahrzeugherstellern gleiche Kostenfunktion benötigt beziehungsweise kann auf eine fehleranfällige Annahme verzichtet werden. Die eigenen Kosten werden in jedem Fahrzeug intern berechnet und auf das Intervall [-1, 1] normiert an die anderen Fahrzeuge übermittelt. Bezugstrajektorien erfordern keine unbedingte Kollisionsfreiheit, da eine virtuelle Kollision auch dadurch verursacht werden kann, dass die Prädiktionshorizonte (Dauer der Vorausschau) der betrachteten Trajektorien nicht zusammenpassen, beispielsweise wenn einer der Kooperationspartner einen extrem kurzen Prädiktionshorizont von < 1s nutzt. In diesem Fall wird es selten zu Kollisionen von Bezugstrajektorien kommen. Im anderen Extrem wird ein sehr großer Prädiktionshorizont immer zu Kollisionen führen, was ein ständiges Versenden von Bedarfstrajektorien auslösen würde. Der "richtige" Prädiktionshorizont ist situationsabhängig.

Bei dem hier vorgestellten Ansatz bedarf eine Kooperation keiner aktiven Anfrage. Hier kann die Kooperation durch ein Fahrzeug, welches den zukünftigen Kooperationsbedarf durch ein anderes bereits im Vorfeld erkennt, weil es z.B. über ein viel umfassenderes Umweltmodell dank seiner besseren Sensorik verfügt, mittels Alternativtrajektorien angeboten werden.

Des Weiteren ist ein Verhandeln oder optimierendes Abstimmen von Manövern möglich. Beispielsweise könnte das erste Fahrzeug eine Bedarfstrajektorie verschicken, die das zweite Fahrzeug zum Verringern der Geschwindigkeit um 20 km/h nötigt, falls das zweite Fahrzeug kooperieren möchte. Bei dem hier vorgestellten Ansatz kann das zweite Fahrzeug mitteilen, dass eine Verringerung der Geschwindigkeit um 10 km/h akzeptabel wäre und es dann zu einer Kooperation bereit wäre. Dabei ist ein konkretes Ändern der Bezugstrajektorie nicht erforderlich, wodurch ein sofortiger Eingriff in die Fahrzeugregelung vermieden werden kann. So wird ein unverbindliches fortlaufendes Verhandeln/Optimieren erreicht.

Bei dem hier vorgestellten Ansatz erfolgt ein rein informatives Verschicken von Trajektorien. Die dezentrale kooperative Manöverabstimmung weist zwei Teile auf. Zum einen wird ein Protokoll mit einem Satz Regeln vorgestellt, das es Fahrzeugen erlaubt zu kommunizieren. Zum anderen werden Verfahren vorgestellt, um mit Hilfe dieses Protokolls unterschiedliche kooperative Manöverabstimmungen durchzuführen. Das grundlegende Prinzip ist, dass Fahrzeuge eine Trajektorienschar beziehungsweise eine Menge von Trajektorien beziehungsweise ein Trajektorienbündel austauschen. Diese Menge besteht aus einer "Bezugstrajektorie", 0 bis n "Alternativtrajektorien" und/oder 0 bis m "Bedarfstrajektorien".

Eine "Bezugstrajektorie" ist die Trajektorie, der das Fahrzeug aktuell folgt und als Sollgröße durch den Fahrregler/Fahrer umgesetzt wird. Die "Bezugstrajektorie" wird immer mitgeteilt. Eine "Alternativtrajektorie" beschreibt ein Manöver, das zwar "teurer" als die Bezugstrajektorie ist, aber das das Fahrzeug ggf. bereit wäre, zu fahren. Die "Alternativtrajektorie" wird optional mitgeteilt. Eine "Bedarfstrajektorie" beschreibt ein gewünschtes Manöver, das das Fahrzeug aufgrund niedrigerer "Kosten" gerne fahren würde, aber aktuell nicht fahren kann, z.B. weil der benötigte Manöverraum durch andere Fahrzeuge belegt ist. Die "Bedarfstrajektorie" wird optional mitgeteilt. Die Trajektorien (Bezugstrajektorie, Bedarfstrajektorie, Alternativtrajektorie) werden dabei nicht explizit per ID bzw. Marker codiert. Vielmehr wird neben den Trajektorien als solche noch für jede Trajektorie ein Kostenwert übertragen. Dies ermöglicht es, jede Trajektorie in Bezug zu den anderen Trajektorien zu setzen und daraus deren Bedeutung und Priorität abzuleiten. Die Übertragung des Kostenwerts für jede Trajektorie erlaubt es anderen Verkehrsteilnehmern eine lokale Approximation der Kostenfunktion des sendenden Fahrzeugs zu ermitteln. Das gelingt insbesondere dann gut, wenn die Kostenwerte und die zugehörigen Trajektorien über die Zeit gesammelt auswertet werden.

Zusätzlich ist vorgesehen, dass für jede Trajektorie optional eine Kategorie angegeben werden kann. Diese Kategorie ist hilfreich für die Berücksichtigung der Trajektorie in der Manöverplanung in den Fremdfahrzeugen beziehungsweise anderen Fahrzeugen.

Wenn das Fahrzeug einer "Notfalltrajektorie" folgt, dann befindet es sich in einem technischen (z.B. Reifenplatzer) oder situationsbedingten Notfall (z.B. Kind läuft auf Fahrbahn), d.h. es wird sich nicht an die normalen Verkehrsregeln halten können (z.B. Anhalten auf Autobahn) oder stellt eine potentielle Gefährdung für andere Fahrzeuge dar (durch starkes Bremsen/Lenken).

Ein "Kooperationsangebot" stellt ein Angebot an andere Fahrzeuge dar, um deren Bedarfstrajektorien zu ermöglichen. Die betroffenen Fahrzeuge können über ein weiteres optionales Feld mit den V2X-IDs der angesprochenen Fahrzeuge angegeben werden.

Wenn eine Trajektorie mit der Kategorie "Einsatzfahrzeug" markiert ist, hat das Fahrzeug auf dieser Trajektorie besonderen Vorrang, da es sich im Einsatz befindet (für das Fahrzeug als solches ist die Info bereits in der CAM (Cooperative Awareness Message) enthalten).

Über eine Kategorie "Vorschlag" können in Verbindung mit dem Feld der V2X-ID Trajektorien als Manöver-Vorschläge für spezifische andere Fahrzeuge versendet werden.

Das Konzept beinhaltet Trajektorien mit je einem Kostenwert und eine Möglichkeit zur Klassifizierung und Kategorisierung der Trajektorien. Die Trajektorien werden als Bezugstrajektorie, Bedarfstrajektorien und Alternativtrajektorien klassifiziert. Die Alternativtrajektorien können als Kooperationsangebote verstanden werden. Bezugstrajektorien können innerhalb einer definierten Beobachtungszeit kollisionsbehaftet sein. Nach Ablauf der Beobachtungszeit ist Kollisionsfreiheit erforderlich. Alternativtrajektorien und Bedarfstrajektorien sind auch dann gerechtfertigt, wenn die Bezugstrajektorien von Fahrzeugen nicht kollidieren.

So kann das Fahrzeug präventiv/proaktiv Trajektorien mitteilen, die es bereit wäre zu fahren, da die Nachteile im Rahmen seiner eigenen Kostenfunktion akzeptabel sind. Es besteht die Möglichkeit zur Verhandlung über eine Kooperation bevor Einfluss auf das jeweilige Fahrzeug genommen wird. Daraus ergibt sich die Möglichkeit zur effizienten Optimierung der Manöver der an einer Kooperation beteiligten Fahrzeuge. Weiterhin ergibt sich die Möglichkeit der extremen Senkung des Rechenbedarfs, da Präferenzen aller Kooperationspartner explizit über Aufwandswerte beziehungsweise Kosten kodiert und mitgeteilt werden und somit eine aufwändige Kostenanalyse für fremde Fahrzeuge entfallen kann. Durch den übertragenen Kostenwert erhöht sich die Chance auf eine erfolgreiche Kooperation, da die Kosten des Kooperationspartners besser abgeschätzt werden können, ggf. kann auch ganz auf eine lokale Abschätzung fremder Kosten verzichtet werden. Die Kosten für eine der empfangenen Fremdtrajektorien können auch lokal im Fahrzeug abgeschätzt werden. Gegebenenfalls können die empfangenen Kostenwerte aller Fremdkosten skaliert werden. Damit kann bei geringem Rechenaufwand eine grobe Vergleichbarkeit der eigenen und fremden Kosten ermöglicht werden. Durch die Einführung von Kategorien ergibt sich eine bessere Unterstützung von Manöverplanungsalgorithmen.

Es wird ein Verfahren zur kooperativen Manöverabstimmung zwischen mehreren Fahrzeugen beschrieben, welches auf dem periodischen oder event-basierten (d.h. bei Erfüllen gewisser Bedingungen) Austausch von Trajektorieninformationen zwischen den Fahrzeugen basiert. Zunächst werden die übertragenen Informationen beschrieben. Anschließend wird das Abstimmungskonzept in verschiedenen Verfahrensvarianten beschrieben.

Hier werden zunächst Regeln zum Versenden für die verschiedenen Trajektorien definiert. Die ausgetauschten Trajektorieninformationen, nachfolgend als das ausgetauschte Trajektorienschar beziehungsweise Trajektorienbündel bezeichnet, bestehen aus der Bezugstrajektorie des Fahrzeugs, einer Anzahl M (M>= 0) von Bedarfstrajektorien, einer Anzahl N (N>= 0) von Alternativtrajektorien und einem relativen Kostenwert C (-1 <=C <= 1) für jede übertragene Trajektorie.

Die Bezugstrajektorie ist besonders gekennzeichnet, z.B. dadurch, dass sie immer an erster Stelle in der Botschaft steht. Alternativ oder ergänzend kann sie auch durch eine explizite Markierung gekennzeichnet sein. Für jede Trajektorie kann eine spezielle Kategorisierung als Kooperationsangebot / Notfalltrajektorie / Einsatztrajektorie / etc. übermittelt werden. Jede Trajektorie kann mit einer Liste von V2X-Ids anderer Fahrzeuge ergänzt werden, auf die sich die Trajektorie mit ihrer Kategorisierung bezieht.

Die Kategorie "Vorschlag" kann verwendet werden, um Fremdfahrzeugen z.B. in besonderen Situationen, wie Rettungsgasse bilden oder Ausweichen vor Hindernissen, Trajektorien vorzuschlagen, die diese dann abfahren können.

Die relativen Kostenwerte der Trajektorien sind wie folgt festgelegt. Die Bezugstrajektorie hat einen Kostenwert Co im Intervall -1 < C₀ < 1. Die Bedarfstrajektorien haben einen Kostenwert C < C₀. Die Alternativtrajektorien haben einen Kostenwert C > Co.

Die Bezugstrajektorie ist die Trajektorie, der das Fahrzeug aktuell folgt und die die Sollgröße für den Fahrregler / Fahrer ist. Bezugstrajektorien sollen grundsätzlich konfliktfrei sein, jedoch ist für begrenzte Zeiträume oder oberhalb eines Prädiktionshorizonts oder oberhalb einer time-to-collision (TTC)-Schwelle ein Konflikt möglich. Treten Konflikte auf, werden sie gemäß StVO (Straßenverkehrsordnung) gelöst. Ein Konflikt kann von demjenigen Fahrzeug gelöst werden, das gemäß der StVO nachrangig ist. Das bevorrechtigte Fahrzeug darf also weiterhin seine konfliktbehaftete Trajektorie versenden.

Eine Alternativtrajektorie ist eine Trajektorie, die teurer als die Bezugstrajektorie ist, aber die das Fahrzeug trotzdem ggf. bereit wäre zu fahren. "Ggf." bedeutet hier "unter Vorbehalt", d.h. z.B. kann eine Zustimmung des Fahrers abgefragt werden, bevor eine Alternativtrajektorie zur Bezugstrajektorie werden kann. Es kann noch eine Bewertung der sich ergebenen Gesamtsituation stattfinden, wobei geprüft wird, ob den eigenen Zusatzkosten ein (nach lokaler Sicht) ausreichender Benefit bei den anderen Fahrzeugen gegenübersteht. Optional können die Alternativtrajektorien so geplant werden, dass sie konfliktfrei mit allen anderen Bezugstrajektorien sind.

Eine Bedarfstrajektorie ist eine Trajektorie, die besser das gewünschte Fahrziel erfüllt, somit günstiger als die Bezugstrajektorie ist. Die Bedarfstrajektorie ist konfliktbehaftet mit anderen Trajektorien. "Andere Trajektorien" sind dabei fremde Bezugstrajektorien. Falls diese z.B. aufgrund eines unterschiedlichen Planungshorizonts zu kurz sind, reicht es, wenn der Konflikt mit der internen Extrapolation der Bezugstrajektorien auftritt.

Die ausgetauschten Trajektorien eines Trajektorienbündels verstehen sich nicht ausschließlich als Trajektorien im Euklidischen Raum, sondern können auch Trajektorien in anderen möglichen Räumen sein. Ein Beispiel hierfür ist der Frenet-Raum entlang der Spurmitten, bei dem eine Trajektorie aus der Angabe der jeweiligen Spur sowie aus den Abschnitten auf der Spurmitte über die Zeit bestehen kann. Auf diese Weise kann das Trajektorienbündel in einem strukturierten Verkehrsraum (= z.B. Autobahn mit Spurmarkierungen) effizient übertragen werden.

In einem Ausführungsbeispiel verwenden die beteiligten Fahrzeuge die unabhängig von der Kooperation ausgetauschten Nachrichten zu ihrem Umfeld, wie z.B. Egozustand oder Sensorinformationen. Auf diese Weise können die Trajektorien anderer Verkehrsteilnehmer zusätzlich plausibilisiert werden, indem bspw. Situationen mit Hilfe fremder Sensordaten eindeutiger klassifiziert werden.

In einem Ausführungsbeispiel wird ein Abstimmungskonzept unter Nutzung der Kostenwerte der Trajektorien, basierend auf einer fahrzeugübergreifend sehr ähnlichen Kostenfunktion angewendet. Für die Beschreibung des Abstimmungskonzepts wird exemplarisch ein Szenario betrachtet, bei dem ein erstes Fahrzeug auf eine vorfahrtsberechtigte Straße auffährt, auf der ein zweites Fahrzeug fährt. Das Ausgangsszenario ist in Fig. 2 dargestellt, in der das zweite Fahrzeug auf der Hauptfahrbahn zunächst alleine unterwegs ist. Da es keinen Bedarf für ein Manöver hat, verschickt es in seinem Trajektorienbündel seine Bezugstrajektorie sowie hier drei Alternativtrajektorien. Die Alternativtrajektorien können durch ein leichtes Abbremsen (C = 0.1), ein leichtes Beschleunigen (C = 0.2) oder einen Spurwechsel (C = 0.3) erreicht werden. D.h. das zweite Fahrzeug wäre eher bereit an der Auffahrt etwas abzubremsen, bzw. Schleppmoment anzulegen. Die alternativen Manöver können auch jeweils mit dem gleichen Kostenwert verschickt werden, um die Kostenfunktionen zu approximieren. Damit kann z.B. erkannt werden, dass für das versendende Fahrzeug Verzögern mit -0,5 m/s² genauso teuer ist wie Beschleunigen mit 1,0 m/s².

Das erste Fahrzeug verschickt in seinem Trajektorienbündel seine Bezugstrajektorie mit einem Auffahren auf der Höhe der halben Beschleunigungsspur, die ein Auffahrmanöver beinhaltet, aber nicht durchgeführt werden kann, weil sie mit der Bezugstrajektorie des vorfahrtsberechtigten zweiten Fahrzeugs kollidiert. Diese Situation ist aufgrund einer angenommenen Übertragungsstörung entstanden, da das erste Fahrzeug bei Kenntnis der vorfahrtsberechtigten Trajektorie des zweiten Fahrzeugs seine Bezugstrajektorie anders geplant hätte. Weiterhin verschickt das erste Fahrzeug in seinem Trajektorienbündel ein Bleiben auf der Beschleunigungsspur als Alternativtrajektorie und ein Auffahren am Ende der Beschleunigungsspur als Bedarfstrajektorie.

Bei der Manöverabstimmung wird ausgenutzt, dass Fahrzeuge Bedarfs- und/oder Alternativtrajektorien verschicken können. Die nachfolgende Beschreibung der Abstimmung erfolgt einmal aus der Sicht des kooperationsbedürftigen ersten Fahrzeugs und einmal aus der Sicht des kooperationsgewährenden zweiten Fahrzeugs.

Bei der Abstimmung aus der Sicht des Kooperationsbedürftigen stellt das erste Fahrzeug basierend auf dem vom zweiten Fahrzeug empfangenen Trajektorienbündel fest, dass seine Bezugstrajektorie, also seine aktuelle Trajektorie sowie seine Bedarfstrajektorien nicht realisierbar sind, weil sie mit der vorfahrtsberechtigten Bezugstrajektorie des zweiten Fahrzeugs kollidieren. Aufgrund der Kollision der Bezugstrajektorien erkennt das erste Fahrzeug, dass es erforderlich ist seine Bezugstrajektorie anzupassen und es somit kooperationsbedürftig ist und es erforderlich ist, dies auch zu kommunizieren.

Dieser Prozess wird in zwei Stufen durchgeführt, wobei die zweite Stufe nur durchlaufen wird, wenn die erste Stufe nicht erfolgreich war. Dieser zweistufige Prozess erlaubt es, dass der Berechnungsaufwand der Abstimmung gering ist, wenn ausschließlich die erste Stufe durchlaufen wird. Hierbei wird in beiden Stufen das Wissen der Kosten der Fremd- und Ego-Trajektorien genutzt, um die Chancen auf eine erfolgreiche Kooperation zu maximieren.

Die erste Stufe der Trajektorienberechnung verwendet für Fremdfahrzeuge ausschließlich die Trajektorien, die von diesen Fahrzeugen empfangen wurden. Die Berechnung läuft so ab, dass für das Ego-Fahrzeug eine Schar von Trajektorien zusammen mit den zugehörigen Kostenwerten generiert wird, wobei dynamische Objekte ignoriert und lediglich statische Beschränkungen, wie Fahrbahngrenzen und statische Objekte, wie liegen gebliebene Fahrzeuge betrachtet werden. Die Kostenwerte können anschließend auf das Intervall [-1; 1] normiert werden.

Die berechneten Trajektorien werden mit je einer Trajektorie von Fremdfahrzeugen zu Tupeln kombiniert, d.h. es wird ein kartesisches Produkt zwischen den berechneten und den empfangenen Trajektorien anderer Fahrzeuge gebildet. Vorher werden die fremden Trajektorien auf den aktuellen Berechnungszeitpunkt transformiert (sog. zeitliches Alignment der Trajektorien). Für Fahrzeuge, für die keine Trajektorie vorliegt, z.B. weil diese nicht hinreichend technisch ausgestattet sind, aber vom Ego-Fahrzeug entweder über die bordeigene Sensorik oder über Informationen von Fremdfahrzeugen aus V2V-Kommunikation erkannt werden, wird die wahrscheinlichste Trajektorie bestimmt.

Nun wird zunächst die Bezugstrajektorie des Ego-Fahrzeugs bestimmt. Dazu werden Tupel aussortiert, in denen es zu Kollisionen mit den Bezugstrajektorien der Fremdfahrzeuge in dem für das geplante Manöver relevanten Bereich kommt, wobei ein Sicherheitsabstand beachtet werden kann, der sowohl die Lokalisierungsunsicherheiten der beteiligten Fahrzeuge als auch Fehler beim zeitlichen Alignment der Trajektorien einschließt. Aus den verbleibenden Tupeln wird nun das Tupel mit der geringsten Summe der Kosten, also Kosten der Fremdtrajektorien kombiniert mit den Kosten der Egotrajektorie ausgewählt. Die Kombination kann so ausgestaltet sein, dass fahrerabhängig ein eher egoistisches oder altruistisches Grundverhalten abgebildet wird. Die Egotrajektorie aus diesem Tupel wird als die Bezugstrajektorie übernommen. Das ausgewählte Tupel und die damit ausgewählte neue Bezugstrajektorie fungieren nun als ein Referenzwert (Referenztupel).

Basierend darauf werden aus allen Tupeln (auch den kollisionsbehafteten) mit niedrigeren Gesamtkosten (bei eher egoistischer Kostengewichtung aus Ego- und Fremdkosten) als denen des Referenztupels M geeignete Tupel (z.B. den niedrigsten Kosten und/oder unter Beachtung eines Mindestabstands, um eine ausreichende Unterschiedlichkeit der ausgewählten Tupel zu garantieren) ausgewählt. Die Egotrajektorien aus diesen Tupeln werden als "Bedarfstrajektorien" für das neue, zu verschickende Trajektorienbündel ausgewählt.

Aus den Tupeln mit höheren Gesamtkosten als denen des Referenztupels werden N Tupel mit den niedrigsten (und/oder unter Beachtung eines Mindestabstands zwischen den Tupeln) Kosten ausgewählt. Die Egotrajektorien aus diesen Tupeln werden als "Alternativtrajektorien" für das neue, zu verschickende Trajektorienbündel ausgewählt. Optional kann mindestens eine Alternativtrajektorie ausgewählt werden, die mit möglichst vielen empfangenen fremden Bezugstrajektorien kollisionsfrei ist, um die Chance auf ein Eingehen auf den Kooperationswunsch zu maximieren.

Das Trajektorienbündel, welches die Ergebnisse dieser Auswahl repräsentiert wird verschickt. Für das in Fig. 2 dargestellte Szenario ist die Lösung in Fig. 4 dargestellt.

Die zweite Stufe der Trajektorienberechnung wird durchlaufen, wenn keines der in der ersten Stufe bestimmten Tupel kollisionsfrei ist. Dabei werden für alle ausgestatteten Fahrzeuge Scharen von Trajektorien berechnet. Für nicht ausgestattete Fahrzeuge wird eine wahrscheinlichste Trajektorie bestimmt. Anschließend werden die Kosten der für die ausgestatteten Fahrzeuge berechneten Trajektorien bestimmt. Für das eigene Fahrzeug werden die Kosten gemäß der eigenen Kostenfunktion berechnet und auf das Intervall [-1; 1] normiert. Für Fremdfahrzeuge werden die Kosten für die berechneten Trajektorien relativ zu den Trajektorien, die in den von diesen Fahrzeugen empfangenen Trajektorienbündeln enthalten sind, über ein Abstandsmaß berechnet. Auf diese Weise wird eine Approximation der Kostenfunktion des jeweiligen Fahrzeugs für die Bewertung der für dieses Fahrzeug berechneten Trajektorien verwendet.

Anschließend werden die entsprechenden Schritte der ersten Stufe durchlaufen und das resultierende Trajektorienbündel wird verschickt.

Der beschriebene Berechnungsprozess aus der ersten Stufe und wenn notwendig der zweiten Stufe wird ggf. über mehrere Sendezyklen durchgeführt, bis die Bezugstrajektorie des ersten Fahrzeugs in dem für das geplante Manöver relevanten Bereich nicht mehr mit den Bezugstrajektorien anderer Fahrzeuge kollidiert und damit abgefahren werden kann. Eine mögliche Lösung für das betrachtete Szenario ist in Fig. 4 dargestellt.

Die Abstimmung aus Sicht des gewährenden zweiten Fahrzeugs auf der Hauptfahrbahn läuft ebenfalls in einem zweistufigen Prozess ab, wobei die zweite Stufe nur durchlaufen wird, wenn die erste Stufe kein Ergebnis liefert. Die Berechnung der Trajektorien in den beiden Stufen erfolgt wie oben beschrieben. Bevor die Berechnung durchgeführt wird, wird überprüft, ob Kooperationsbedarf besteht. Dass Bedarf für eine Kooperation seitens des ersten Fahrzeugs besteht, kann das zweite Fahrzeug im Einzelfall daran erkennen, dass die Bezugstrajektorie des ersten Fahrzeugs im relevanten Bereich nicht realisierbar ist, was dann passieren kann, wenn aufgrund von Abschattungen dem Sender zum Planungszeitpunkt die Existenz eines anderen Fahrzeugs nicht bekannt war. Deswegen wird das zweite Fahrzeug für sich intern zunächst eine andere Trajektorie aus dem Bündel des ersten Fahrzeugs als dessen aktuelle Trajektorie ansehen. Dazu wird eine Bedarfstrajektorie oder eine Alternativtrajektorie des ersten Fahrzeugs als dessen aktuelle Trajektorie angesehen, die über den geringsten Kostenwert verfügt und die innerhalb des Kollisionshorizonts mit der aktuellen Trajektorie des zweiten Fahrzeugs nicht kollidiert. Im betrachteten Beispiel aus Fig. 2 ist es die Alternativtrajektorie mit dem Kostenwert C = 0.7, da die Bedarfstrajektorie ebenfalls mit der aktuellen Trajektorie des zweiten Fahrzeugs kollidiert und damit weiterhin zweitfahrzeugintern als eine Bedarfstrajektorie geführt wird. Im anschließenden Berechnungsprozess zur Bestimmung des zu versendenden Trajektorienbündels passt das zweite Fahrzeug seine aktuelle Trajektorie ggf. so an, dass das erste Fahrzeug auffahren kann. Eine mögliche Lösung ist in Fig. 4 dargestellt.

Ein Fahrzeug, das z.B. aus seiner Situationsanalyse erkennt, dass ein anderes Auto z.B. auf die Autobahn auffahren wird und dann Kooperationsbedarf haben wird, kann proaktiv bereits eine Kooperation anbieten. Dies tut es dadurch, dass es eine passende Alternativtrajektorie erzeugt und diese verschickt (optional noch Setzen der Kategorie "Kooperationsangebot"). Das auffahrende Fahrzeug kann dann sofort eine passende Bedarfstrajektorie erzeugen und verschicken. Daraufhin wird das Fahrzeug auf der Hauptfahrbahn seine Bezugstrajektorie anpassen. Das hier beschriebene recheneffizientere Konzept basiert darauf, dass Fahrzeuge permanent (mehr oder weniger viel) Kooperation anbieten.

In bestimmten Situation kann es hilfreich sein, Trajektorien als Vorschläge an andere Fahrzeuge zu verschicken. Beispielsweise bei einem Einsatzfahrzeug, das auf der Autobahn eine Rettungsgasse gebildet haben möchte. Solche Vorschläge können z.B. für manuell gefahrene Fahrzeuge als Hinweis an den Fahrer sinnvoll sein. Eine andere Einsatzmöglichkeit kann bei plötzlichen Notsituation entstehen (Ausweichen vor einem unerwarteten Hindernis), wenn wenig Zeit für eine Abstimmung bleibt. Vorschläge können auch in Situationen, die uneindeutig sind, hilfreich sein, wie z.B. viele Fahrzeuge gleichzeitig an einer Rechts-vor-links Kreuzung. Hierzu berechnet ein Fahrzeug Trajektorien für andere Fahrzeuge, kennzeichnet sie als "Vorschlag" und versieht sie mit der V2X-Id der adressierten Fahrzeuge. Die Vorschlagstrajektorien werden an die Manöverkooperationsbotschaft angehängt und versendet. Die Kostenwerte der Vorschlagstrajektorien sind dabei bedeutungslos. Die anderen Fahrzeuge empfangen die Botschaft und sehen, dass für sie ein Vorschlag enthalten ist. Im Rahmen ihrer üblichen Trajektorienermittlung bewerten sie den Vorschlag auf Plausibilität und berücksichtigen ihn ggf. bevorzugt. Vorteil ist, dass sie bei möglicherweise alternativen internen Lösungsmöglichkeiten eine Variante vorgeschlagen bekommen, die von einer zentralen Stelle koordiniert wurde. Das hier beschriebene Verfahren ermöglicht damit eine zentrale Manöverabstimmung.

Durch den hier vorgestellten Ansatz kann eine effiziente Optimierung von kooperativen Manövern erreicht werden. Statt nur einer Bedarfs- oder nur einer Alternativtrajektorie verschickt jedes Fahrzeug mehrere Varianten dieser Trajektorien. Durch die mitgeteilten Kooperationskosten werden anderen Fahrzeugen die Präferenzen bekannt gemacht. Ein empfangendes Fahrzeug kann nun direkt seine bevorzugte Lösung auswählen. Außerdem kann es seinerseits noch weiter eine Reihe von Bedarfstrajektorien oder Alternativtrajektorien rund um die eigene Lösung ermitteln und versenden.

In folgenden Quellen können ergänzende Informationen betreffend den technischen Hintergrund zu dem hier vorgestellten Ansatz gefunden werden:
https://www.imagine-online.de/home/ (aufgerufen am 26.01.2018) Projekt IMAGinE - Intelligente Manöver Automatisierung - kooperative Gefahrenvermeidung in Echtzeit Werling et al., "Optimal trajectories for time-critical street scenarios using discretized terminal manifolds", The International Journal of Robotics Research, 2011 Düring et al., "Adaptive Cooperative Maneuver Planning Algorithm for Conflict Resolution in Diverse Traffic Situations", International Conference on Connected Vehicles and Expo, 2014
DE10 2016 209 330 A1
DE10 2012 011 994 A1

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum kooperativen Abstimmen von zukünftigen Fahrmanövern eines Fahrzeugs (100) mit Fremdmanövern zumindest eines Fremdfahrzeugs (104), wobei das Verfahren die folgenden Schritte aufweist:
Bewerten einer Trajektorienschar (106) aus vorausgeplanten Trajektorien (108) für das Fahrzeug (100) mit je einem Aufwandswert (112) unter Verwendung zumindest eines Bewertungskriteriums;
Empfangen eines Fremddatenpakets (202) von dem Fremdfahrzeug (104), wobei in dem Fremddatenpaket (202) eine Fremdtrajektorienschar (200) mit unterschiedlichen vorausgeplanten Fremdtrajektorien (204) für das Fremdfahrzeug (104) und zu jeder Fremdtrajektorie (204) ein Fremdaufwandswert (208) enthalten sind;
Kombinieren je einer Trajektorie (108) und einer Fremdtrajektorie (204) zu Tupeln (210) und Kombinieren des jeweiligen Aufwandswerts (112) mit dem jeweiligen Fremdaufwandswert (208) zu einem Tupelaufwandswert des Tupels (210);
Auswählen von kollisionsfreien Tupeln (210), wobei Tupel (210) ausgewählt werden, bei denen die Trajektorie (108) und die Fremdtrajektorie (204) innerhalb eines Kollisionshorizonts kollisionsfrei sind;
Auswählen des kollisionsfreien Tupels (210) mit dem geringsten Tupelaufwandswert und Klassifizieren der Trajektorie (108) und des zugehörigen Aufwandswerts (112)
dieses Tupels (210) als Bezugstrajektorie (110) und Bezugsaufwandswert (114);
**dadurch gekennzeichnet, dass** das Verfahren die folgenden weiteren Schritte aufweist:
Auswählen von Trajektorien (108) mit einem niedrigeren Aufwandswert (112) als der Bezugsaufwandswert (114) und Klassifizieren dieser Trajektorien (108) und zugehöriger Aufwandswerte (112) als Bedarfstrajektorien und
Bedarfsaufwandswerte, wobei eine Bedarfstrajektorie eine einen Wunsch des Fahrzeugs angebende Trajektorie ist, mit der ein gewünschtes Fahrziel günstiger erreicht werden kann als mit der Bezugstrajektorie;
Auswählen von Trajektorien (108) mit einem höheren Aufwandswert (112) als der Bezugsaufwandswert (114) und Klassifizieren dieser Trajektorien (108) und zugehöriger Aufwandswerte (112) als Alternativtrajektorien und
Alternativaufwandswerte, wobei eine Alternativtrajektorie eine ein Kooperationsangebot der Fahrzeugs angebende Trajektorie ist, die das Fahrzeug gegebenenfalls bereit wäre, zu fahren; und
Senden eines Datenpakets (120) an das Fremdfahrzeug (104), wobei in dem Datenpaket (120) eine Trajektorienschar (106) aus der Bezugstrajektorie (110) und des zugehörigen Bezugsaufwandswerts (114) sowie zumindest einer Trajektorie (108) aus einer Gruppe umfassend die Bedarfstrajektorien und die Alternativtrajektorien sowie die entsprechenden Aufwandswerte (112) enthalten sind.

2. Verfahren gemäß Anspruch 1, bei dem im Schritt des Auswählens der Kollisionshorizont situationsabhängig ist.

3. Verfahren gemäß einem der vorhergehenden Ansprüche, bei dem im Schritt des Empfangens das Fremddatenpaket (202) ferner Sensordaten des Fremdfahrzeugs (104) enthält, wobei im Schritt des Auswählens der Kollisionshorizont unter Verwendung der Sensordaten eingestellt wird und/oder im Schritt des Sendens im Datenpaket (120) ferner Sensordaten des Fahrzeugs (100) enthalten sind.

4. Verfahren gemäß einem der vorhergehenden Ansprüche, bei dem im Schritt des Auswählens die kollisionsfreien Tupel (210) unter Verwendung der Straßenverkehrsordnung ausgewählt werden, wobei Tupel (210), deren Trajektorie (108) gegenüber der Fremdtrajektorie (204) vorfahrtsberechtigt ist, als kollisionsfreie Tupel (210) ausgewählt werden.

5. Verfahren gemäß einem der vorhergehenden Ansprüche, bei dem im Schritt des Empfangens zumindest ein weiteres Fremddatenpaket (202) von einem weiteren Fremdfahrzeug (104) empfangen wird, wobei im Schritt des Kombinierens eine weitere Fremdtrajektorie (204) zu dem Tupel (210) hinzugefügt wird, wobei der Tupelaufwandswert mit einem weiteren Fremdaufwandswert (208) ergänzt wird.

6. Verfahren gemäß einem der vorhergehenden Ansprüche, bei dem im Schritt des Empfangens die Fremdtrajektorienschar (200) ferner eine Fremdbezugstrajektorie (206) des Fremdfahrzeugs (104) und einen Fremdbezugsaufwandswert der Fremdbezugstrajektorie (206) aufweist, wobei im Schritt des Kombinierens Fremdbezugstupel aus der Fremdbezugstrajektorie (206) und einer der Trajektorien (108) kombiniert werden, wobei im Schritt des Auswählens die Trajektorie (108) des kollisionsfreien Fremdbezugstupels mit dem niedrigsten Tupelaufwandswert als Bezugstrajektorie (110) ausgewählt wird.

7. Verfahren gemäß einem der vorhergehenden Ansprüche, bei dem im Schritt des Empfangens zu zumindest einer Fremdtrajektorie (204) eine Kategorie empfangen wird, wobei im Schritt des Auswählens die Bezugstrajektorie (110) ferner unter Verwendung der Kategorie ausgewählt wird.

8. Verfahren gemäß einem der vorhergehenden Ansprüche, bei dem im Schritt des Auswählens die Alternativtrajektorien aus innerhalb des Kollisionshorizonts kollisionsfreien Tupeln (210) ausgewählt werden.

9. Verfahren gemäß einem der vorhergehenden Ansprüche, bei dem im Schritt des Kombinierens die Fremdtrajektorie (204) zumindest bis zu einem Prädiktionshorizont des Fahrzeugs (100) prädiziert wird, wenn das Fremdfahrzeug (104) einen kürzeren Fremdprädiktionshorizont verwendet.

10. Verfahren gemäß einem der vorhergehenden Ansprüche, bei dem im Schritt des Kombinierens die Fremdtrajektorien (204) auf einen Berechnungszeitpunkt der Trajektorien (108) transformiert werden.

11. Vorrichtung (102), wobei die Vorrichtung (102) dazu ausgebildet ist, das Verfahren gemäß einem der vorhergehenden Ansprüche in entsprechenden Einrichtungen auszuführen, umzusetzen und/oder anzusteuern.

12. Computerprogrammprodukt, das dazu eingerichtet ist, das Verfahren gemäß einem der Ansprüche 1 bis 10 auszuführen, umzusetzen und/oder anzusteuern.

13. Maschinenlesbares Speichermedium, auf dem das Computerprogrammprodukt gemäß Anspruch 12 gespeichert ist.

## Claims

1. Method for cooperatively tuning future driving manoeuvres of a vehicle (100) using external manoeuvres of at least one external vehicle (104), the method having the following steps:
evaluating a trajectory set (106) of pre-planned trajectories (108) for the vehicle (100), each having a complexity value (112), using at least one evaluation criterion;
receiving an external data packet (202) from the external vehicle (104), an external trajectory set (200), having different pre-planned external trajectories (204) for the external vehicle (104) and having an external complexity value (208) for each external trajectory (204), being contained in the external data packet (202);
combining a trajectory (108) and an external trajectory (204) in each case to form tuples (210), and combining the associated complexity value (112) with the associated external complexity value (208) to a form a tuple complexity value of the tuple (210);
selecting collision-free tuples (210), tuples (210) being selected in which the trajectory (108) and the external trajectory (204) are collision-free within a collision horizon;
selecting the collision-free tuple (210) having the lowest tuple complexity value, and classifying the trajectory (108) and the assigned complexity value (112) of this tuple (210) as a benchmark trajectory (110) and benchmark complexity value (114);
**characterised in that** method has the following further steps:
selecting trajectories (108) having a complexity value (112) lower than the benchmark complexity value (114), and classifying these trajectories (108) and assigned complexity values (112) as required trajectories and required complexity values, a required trajectory being a trajectory which specifies a wish of the vehicle and with which a desired destination can be achieved more favourably than with the benchmark trajectory;
selecting trajectories (108) having a higher complexity value (112) than the benchmark complexity value (114), and classifying these trajectories (108) and assigned complexity values (112) as alternative trajectories and alternative complexity values, an alternative trajectory being a trajectory which specifies a cooperation offer of the vehicle and which the vehicle would be prepared to travel if necessary; and
sending a data packet (120) to the external vehicle (104), a trajectory set (106), consisting of the benchmark trajectory (110) and the assigned benchmark complexity value (114) plus at least one trajectory (108) from a group comprising the required trajectories, the alternative trajectories and the corresponding complexity values (112), being contained in the data packet (120).

2. Method according to claim 1, in which the step of selecting the collision horizon is situation-dependent.

3. Method according to either of the preceding claims, in which, in the receiving step, the external data packet (202) further contains sensor data of the external vehicle (104), the collision horizon being set using the sensor data in the selection step and/or sensor data of the vehicle (100) further being contained in the data packet (120) in the sending step.

4. Method according to any of the preceding claims, in which, in the selection step, the collision-free tuples (210) are selected using traffic regulations, tuples (210) for which the trajectory (108) has priority over the external trajectory (204) being selected as the collision-free tuples (210).

5. Method according to any of the preceding claims, in which, in the receiving step, at least one further external data packet (202) is received from a further external vehicle (104), a further foreign trajectory (204) being added to the tuple (210) in the combining step, the tuple complexity value being supplemented with a further external complexity value (208).

6. Method according to any of the preceding claims, in which, in the receiving step, the external trajectory set (200) further comprises an external benchmark trajectory (206) of the external vehicle (104) and an external benchmark complexity value of the external benchmark trajectory (206), external benchmark tuples consisting of the external benchmark trajectory (206) and one of the trajectories (108) being combined in the combining step, the trajectory (108) of the collision-free external benchmark tuple having the lowest tuple complexity value being selected as the benchmark trajectory (110) in the selection step.

7. Method according to any of the preceding claims, in which, in the receiving step, a category is received for at least one external trajectory (204), the benchmark trajectory (110) further being selected using the category in the selection step.

8. Method according to any of the preceding claims, in which, in the selection step, the alternative trajectories are selected from tuples (210) which are collision-free within the collision horizon.

9. Method according to any of the preceding claims, in which, in the combining step, the external trajectory (204) is predicted at least as far as a prediction horizon of the vehicle (100) if the external vehicle (104) is using a shorter external prediction horizon.

10. Method according to any of the preceding claims, in which, in the combining step, the external trajectories (204) are transformed onto a time at which the trajectories (108) are calculated.

11. Device (102), the device (102) being formed to perform, implement and/or control the method according to any of the preceding claims in appropriate apparatuses.

12. Computer program product set up to perform, implement and/or control the method according to any of claims 1 to 10.

13. Machine-readable storage medium on which the computer program product according to claim 12 is stored.

## Revendications

1. Procédé de coordination coopérative des futures manœuvres de conduite d'un véhicule (100) avec des manœuvres étrangères d'au moins un véhicule étranger (104), ledit procédé comportant les étapes suivantes :
évaluation d'un ensemble de trajectoires (106) faisant partie des trajectoires prévisionnelles (108) pour le véhicule (100), en attribuant à chacune d'entre elles une valeur d'effort (112) en mettant en œuvre au moins un critère d'évaluation ;
réception d'un paquet de données étrangères (202) en provenance du véhicule étranger (104), le paquet de données étrangères (202) contenant un ensemble (200) de trajectoires étrangères lequel comporte différentes trajectoires étrangères (204) prévisionnelles pour le véhicule étranger (104) et, pour chacune des trajectoires étrangères (204), une valeur d'effort étrangère (208) ;
combinaison de chacune des trajectoires (108) avec une trajectoire étrangère (204) pour ainsi obtenir des uplets (210) et combinaison de la valeur d'effort (112) respective avec la valeur d'effort étrangère (208) respective pour ainsi obtenir une valeur d'effort d'uplet appartenant à l'uplet (210) ;
sélection d'uplets (210) ne provoquant pas de collision, ladite sélection visant des uplets (210) pour lesquels la trajectoire (108) et la trajectoire étrangère (204) ne provoquent pas de collision au sein d'un horizon de collision ;
sélection de l'uplet (210) ne provoquant pas de collision lequel est doté de la valeur d'effort d'uplet le plus faible,
et classification, pour cet uplet (210), de la trajectoire (108) et de la valeur d'effort (112) associée comme trajectoire de référence (110) et valeur d'effort de référence (114) ;
**caractérisé en ce que** le procédé comporte les étapes supplémentaires suivantes :
sélection de trajectoires (108) dotées d'une valeur d'effort (112) inférieure à la valeur d'effort de référence (114) et classification de ces trajectoires (108) et des valeurs d'effort (112) associées comme trajectoires de recours et valeurs d'effort de recours, un trajectoire de recours étant une trajectoire qui indique un souhait émanant du véhicule et qui permet d'atteindre une destination souhaitée d'une manière plus avantageuse que la trajectoire de référence ne le permettrait ;
sélection de trajectoires (108) dotées d'une valeur d'effort (112) supérieure à la valeur d'effort de référence (114) et classification de cette trajectoire (108) et des valeurs d'effort (112) associées comme trajectoires alternatives et valeurs d'effort alternatives, une trajectoire alternative étant une trajectoire laquelle indique une offre de coopération émanant du véhicule et laquelle ledit véhicule pourrait, le cas échéant, emprunter; et
envoi d'un paquet de données (120) au véhicule étranger (104), le paquet de données (120) contenant un ensemble de trajectoires (106) composé de la trajectoire de référence (110) et de la valeur d'effort de référence (114) associée ainsi qu'au moins une trajectoire (108) issue d'un groupe comprenant les trajectoires de recours et les trajectoires alternatives ainsi que les valeurs d'effort (112) correspondantes.

2. Procédé selon la revendication 1, dans lequel, à l'étape de sélection, l'horizon de collision dépend de la situation.

3. Procédé selon l'une des revendications précédentes, dans lequel, à l'étape de réception, le paquet de données étrangères (202) comprend en outre des données de capteur émanant du véhicule étranger (104), dans lequel, à l'étape de sélection, l'horizon de collision est réglé en utilisant lesdites données de capteur et/ou dans lequel, à l'étape d'envoi, le paquet de données (120) comprend en outre des données de capteur émanant du véhicule (100).

4. Procédé selon l'une des revendications précédentes, dans lequel, à l'étape de sélection, les uplets (210) ne provoquant pas de collision sont sélectionnés en mettre en œuvre le code de la route, les uplets (210) qui sont sélectionnés en tant qu'uplets (210) ne provoquant pas de collision étant ceux dont la trajectoire (108) a la priorité vis-à-vis de la trajectoire étrangère (204).

5. Procédé selon l'une des revendications précédentes, dans lequel, à l'étape de réception, un véhicule étranger (104) supplémentaire reçoit au moins un paquet de données étrangères (202) supplémentaire, dans lequel, à l'étape de combinaison, une trajectoire étrangère (204) supplémentaire est ajoutée à l'uplet (210), la valeur d'effort d'uplet étant complétée par une valeur d'effort étrangère (208) supplémentaire.

6. Procédé selon l'une des revendications précédentes, dans lequel, à l'étape de réception, l'ensemble (200) de trajectoires étrangères comporte en outre une trajectoire étrangère de référence (206) du véhicule étranger (104) et une valeur d'effort étrangère de référence de la trajectoire étrangère de référence (206), dans lequel, à l'étape de combinaison, des uplets étrangers de référence émanant de la trajectoire étrangère de référence (206) sont combinés avec l'une des trajectoires (108), dans lequel, à l'étape de sélection, la trajectoire (108) de l'uplet étranger de référence ne provoquant pas de collision qui est dotée de la valeur d'effort d'uplet la moins élevée est sélectionnée comme trajectoire de référence (110).

7. Procédé selon l'une des revendications précédentes, dans lequel, à l'étape de réception, une catégorie est reçue qui est relative à au moins une trajectoire étrangère (204), dans lequel, à l'étape de sélection, la trajectoire de référence (110) est en outre sélectionnée en utilisant ladite catégorie.

8. Procédé selon l'une des revendications précédentes, dans lequel, à l'étape de sélection, lesdites trajectoires alternatives sont sélectionnées parmi les uplets (210) qui, au sein dudit horizon de collision, ne provoquent pas de collision.

9. Procédé selon l'une des revendications précédentes, dans lequel, à l'étape de combinaison, la trajectoire étrangère (204) est prédite au moins jusqu'à un horizon de prédiction du véhicule (100) si le véhicule étranger (104) utilise un horizon de prédiction étranger qui est plus court.

10. Procédé selon l'une des revendications précédentes, dans lequel, à l'étape de combinaison, les trajectoires étrangères (204) subissent une transformation visant le moment de calcul des trajectoires (108).

11. Dispositif (102), lequel dispositif (102) étant configuré pour exécuter, mettre en œuvre et/ou piloter le procédé selon l'une des revendications précédentes dans des organes correspondants.

12. Produit de type logiciel qui est conçu pour exécuter, mettre en œuvre et/ou piloter le procédé selon l'une des revendications 1 à 10.

13. Support de mémoire lisible par ordinateur sur lequel est stocké le produit de type logiciel selon la revendication 12.
